# EUROPEAN PATENT APPLICATION

(11) **EP 4 835 369 A1**
(43) Date of publication of application: **04.11.2026**
(21) Application number: 26171180.8
(22) Date of filing: 08.04.2026
(51) Int. Cl.: F25B 9/00, F17C 13/02

(54) **REFRIGERANT STORAGE TANK AND REFRIGERANT STORAGE METHOD**

(30) Priority: 28.04.2025 KR 20250055688; 20.02.2026 KR 20260032064
(71) Applicant: SK On Co., Ltd., Seoul 03161 (KR); SK Innovation Co., Ltd., Seoul 03188 (KR)
(72) Inventor: KIM, Dong Keun, 34124 Daejeon (KR); LEE, Hee Du, 34124 Daejeon (KR); JEONG, Jae Hun, 34124 Daejeon (KR)
(74) Representative: Prüfer & Partner mbB Patentanwälte · Rechtsanwälte

(57) **Abstract**

The present disclosure relates to a refrigerant storage tank (10) and a refrigerant storage method. A refrigerant storage tank includes a body (100) comprising a storage space (110) that is adapted to store a refrigerant, and a head space (120) that is provided above the storage space; a stored refrigerant transferer (200) coupled to the body and comprising a stored refrigerant inlet line (210), and a stored refrigerant outlet line (230); a composition maintainer (300) coupled to the body and comprising a control refrigerant inlet line (310) that is in communication with the head space, and a vapor-phase refrigerant outlet line (330); a sensor (400) comprising at least one of a liquid level sensor (410), an internal pressure sensor (420), and an internal temperature sensor (430), disposed in the storage space or the head space ; and a controller (500) that is connected to the sensor and the composition maintainer.

## Description

### [BACKGROUND OF THE INVENTION]

### 1. Technical Field

The embodiments of the present disclosure relate to a refrigerant storage tank and a refrigerant storage method.

### 2. Description of the Related Art

A refrigerant is a substance that absorbs heat in a heat pump applied to an air conditioner, a refrigerator, a cooling tower, or other thermal management devices.

Recently, the types of heat pumps used indoors and outdoors have been diversifying, and due to the development of electric vehicles or related electrically powered automotives, miniaturized heat pumps are in demand. Accordingly, combinations of refrigerants that may have a coefficient of performance optimized for each heat pump are being developed.

For example, when two or more types of refrigerants are used in combination, if a change in the composition thereof occurs, a difference in the coefficient of performance of the heat pump may occur. However, in the case of a zeotropic refrigerant mixture, in which two or more types of refrigerants having different characteristics such as different boiling points are mixed, the composition of the refrigerant may change during processes such as storage and transportation.

Therefore, there is a need to develop a refrigerant storage tank or storage method that may suppress a change in the composition of the refrigerant during storage of a zeotropic refrigerant mixture.

### [SUMMARY OF THE INVENTION]

Embodiments of the present disclosure provide a refrigerant storage tank which may suppress a change in composition during storage of a refrigerant mixture.

Embodiments of the present disclosure provide a refrigerant storage method using the refrigerant storage tank.

According to a first general aspect of the present disclosure, there is provided a refrigerant storage tank including: a body including a storage space that is adapted to store a refrigerant, and a head space that is provided above the storage space; a stored refrigerant transferer coupled to the body and including a stored refrigerant inlet line that is in communication with the storage space and configured to introduce the stored refrigerant into the body, and a stored refrigerant outlet line that discharges the stored refrigerant from the body; a composition maintainer coupled to the body and including a control refrigerant inlet line that is in communication with the head space and configured to introduce a control refrigerant into the body, and a vapor-phase refrigerant outlet line that is configured to discharge a vapor-phase refrigerant in the head space from the body; a sensor including at least one of a liquid level sensor, an internal pressure detection sensor, and an internal temperature detection sensor disposed in the storage space or the head space; and a controller that is connected to the sensor and the composition maintainer. It may perform the introduction of the control refrigerant or the discharge of the vapor-phase refrigerant based on the detection signal.

In some embodiments, the stored refrigerant may be a Zeotropic refrigerant mixture in a liquid state. In some embodiments, the control refrigerant may include a refrigerant having a lowest boiling point among refrigerants included in the stored refrigerant.

In some embodiments, the boiling point of the refrigerant having the lowest boiling point among the refrigerants included in the stored refrigerant may be lower than boiling points of other refrigerants by 10 °C or more, more preferably by 12 °C or more, even more preferably by 15 °C or more and most preferably by 20 °C or more.

In some embodiments, each of the stored refrigerant inlet line, the stored refrigerant outlet line, the control refrigerant inlet line, and the vapor-phase refrigerant outlet line may include a valve.

In some embodiments, the refrigerant storage tank may further include a temperature maintainer including at least one of a heater and a cooler that adjusts a temperature inside the body.

According to another general aspect of the present disclosure, there is provided a refrigerant storage method using a refrigerant storage tank, the method comprising: introducing a refrigerant into a storage space that is included in a body comprised in the refrigerant storage tank; setting a liquid level (H), an internal pressure (P), and an initial temperature (T1) in an initial equilibrium state when the stored refrigerant and a vapor-phase refrigerant in a head space comprised in the refrigerant storage tank have reached an equilibrium state; detecting a liquid level (H'), an internal pressure (P'), and an internal temperature (T2) through a liquid level sensor, an internal pressure detection sensor, and an internal temperature detection sensor, respectively; and controlling, by a controller, a control refrigerant inlet line or a vapor-phase refrigerant outlet line based on the liquid level (H'), the internal pressure (P'), and the internal temperature (T2).

In some embodiments, the controlling may further include: when the liquid level (H') drops by a predetermined value or more based on the liquid level (H) in the initial equilibrium state, controlling the control refrigerant inlet line such that a control refrigerant is introduced into the body; and when the liquid level (H') rises by a predetermined value or more based on the liquid level (H) in the initial equilibrium state, controlling the vapor-phase refrigerant outlet line such that the vapor-phase refrigerant is discharged to an outside of the body.

In some embodiments, a signal may be output by the liquid level sensor to the controller for calculating a difference (H'-H) between the liquid level (H') at a time of measurement and the liquid level (H) in the initial equilibrium state. When the liquid level (H') detected by the liquid level sensor drops by the predetermined value or more based on the liquid level (H) in the initial equilibrium state, the control refrigerant inlet line may be controlled by the controller such that the control refrigerant is introduced into the body, and/or when the liquid level (H') detected by the liquid level sensor rises by the predetermined value or more based on the liquid level (H) in the initial equilibrium state, the vapor-phase refrigerant outlet line may be controlled by the controller such that the vapor-phase refrigerant is discharged to the outside of the body. Optionally, the predetermined value is in a range of 1% or more, 0.8% or more, 0.5% or more, 0.3% or more, or 0.1% or more based on the liquid level (H) in the initial equilibrium state.

In some embodiments, the controlling may further include: when the internal pressure (P') decreases by a predetermined value or more based on the internal pressure (P) in the initial equilibrium state, controlling the control refrigerant inlet line such that the control refrigerant is introduced into the body; and when the internal pressure (P') increases by a predetermined value or more based on the internal pressure (P) in the initial equilibrium state, controlling the vapor-phase refrigerant outlet line such that the vapor-phase refrigerant is discharged to the outside of the body.

In some embodiments, a signal for calculating a difference (P'-P) between the internal pressure (P') at a time of measurement and the internal pressure (P) in the initial equilibrium state may be output by the internal pressure detection sensor to the controller. When the internal pressure (P') detected by the internal pressure detection sensor decreases by the predetermined value or more based on the internal pressure (P) in the initial equilibrium state, the control refrigerant inlet line may be controlled by the controller such that the control refrigerant is introduced into the body, and/or when the internal pressure (P') detected by the internal pressure detection sensor increases by the predetermined value or more based on the internal pressure (P) in the initial equilibrium state, the vapor-phase refrigerant outlet line may be controlled by the controller such that the vapor-phase refrigerant is discharged to the outside of the body. Optionally, the predetermined value is in a range of 0.5% or more, 0.3% or more, or 0.1% or more based on the pressure (P) of the head space in the initial equilibrium state.

In some embodiments, it may be determined by the controller whether the stored refrigerant satisfies the appropriate pressure (P1) based on the initial temperature (T1) in the initial equilibrium state detected by the internal temperature detection sensor and the internal pressure (P') detected by the internal pressure detection sensor, and the control refrigerant inlet line or the vapor-phase refrigerant outlet line may be controlled by the controller based on a result of the determination.

In some embodiments, the controlling may further include: in a state where the internal temperature (T2) after the initial equilibrium state is the same as the initial temperature (T1) and the internal pressure (P') after the initial equilibrium state is higher than the appropriate pressure (P1) at the initial temperature (T1), controlling the vapor-phase refrigerant outlet line such that the vapor-phase refrigerant is discharged to the outside of the body until the internal pressure (P') reaches the appropriate pressure (P1); and in a state where the internal temperature (T2) after the initial equilibrium state is the same as the initial temperature (T1) and the internal pressure (P') after the initial equilibrium state is lower than the appropriate pressure (P1) at the initial temperature (T1), controlling the control refrigerant inlet line such that the control refrigerant is introduced into the body until the internal pressure (P') reaches the appropriate pressure (P1).

In some embodiments, when the internal temperature (T2) after the initial equilibrium state is the same as the initial temperature (T1), and the internal pressure (P') after the initial equilibrium state increases beyond the appropriate pressure (P1) at the initial temperature (T1), the vapor-phase refrigerant outlet line may be controlled by the controller such that the vapor-phase refrigerant is discharged to the outside of the body until the internal pressure (P') reaches the appropriate pressure (P1); and when the internal pressure (P') after the initial equilibrium state decreases below the appropriate pressure (P1) at the initial temperature (T1), the control refrigerant inlet line may be controlled by the controller such that the control refrigerant is introduced into the body until the internal pressure (P') reaches the appropriate pressure (P1).

In some embodiments, the controlling may further include: in a state where the internal pressure (P') is the same as the appropriate pressure (P1) and the internal temperature (T2) is higher than the initial temperature (T1), controlling the control refrigerant inlet line such that the control refrigerant is introduced into the body until the internal pressure (P') reaches an appropriate pressure (P2) corresponding to the internal temperature (T2); and in a state where the internal pressure (P') is the same as the appropriate pressure (P1) and the internal temperature (T2) is lower than the initial temperature (T1), controlling the vapor-phase refrigerant outlet line such that the vapor-phase refrigerant is discharged to the outside of the body until the internal pressure (P') reaches the appropriate pressure (P2) corresponding to the internal temperature (T2).

In some embodiments, when the internal pressure (P') after the initial equilibrium state is the same as the appropriate pressure (P1), and the internal temperature (T2) after the initial equilibrium state increases beyond the initial temperature (T1), the control refrigerant inlet line may be controlled by the controller such that the control refrigerant is introduced into the body until the internal pressure (P') reaches the appropriate pressure (P2) corresponding to the internal temperature (T2), and when the internal temperature (T2) after the initial equilibrium state decreases below the initial temperature (T1), the vapor-phase refrigerant outlet line may be controlled by the controller such that the vapor-phase refrigerant is discharged to the outside of the body until the internal pressure (P') reaches the appropriate pressure (P2) corresponding to the internal temperature (T2).

### [BRIEF DESCRIPTION OF THE DRAWINGS]

The above and other objects, features and other advantages of the embodiments of the present disclosure will be more clearly understood from the following detailed description taken in conjunction with the accompanying drawings, in which:
FIG. 1 is a block diagram schematically illustrating a refrigerant storage tank according to an embodiment of the present disclosure;
FIG. 2 is a schematic diagram of a refrigerant storage tank according to an embodiment of the present disclosure;
FIG. 3 is a graph illustrating an appropriate pressure according to a temperature when a stored refrigerant is used, according to an embodiment of the present disclosure; and
FIG. 4 is a flowchart illustrating a refrigerant storage method according to an embodiment of the present disclosure.

### [DETAILED DESCRIPTION OF THE INVENTION]

Hereinafter, exemplary embodiments of the present disclosure will be described in detail with reference to the accompanying drawing so that those skilled in the art may readily practice the present disclosure.

The refrigerants included in the refrigerant mixture may be, e.g., natural refrigerants, chlorofluorocarbon (CFC)-based refrigerants, hydrochlorofluorocarbon (HCFC)-based refrigerants, hydrofluorocarbon (HFC)-based refrigerants, hydrofluoroolefin (HFO)-based refrigerants, or other documented (per)halogenated refrigerants, or any combinations thereof.

The natural refrigerants are substances that exist naturally on earth and are not artificial compounds. The natural refrigerants may include, e.g., ammonia (R-717), carbon dioxide (R-744), propane (R-290), propylene (R-1270), butane (R-600a), water (R-718), or other documented natural refrigerants, or any combinations thereof.

The chlorofluorocarbon (CFC)-based refrigerants are refrigerants composed of chlorine atoms (Cl), fluorine atoms (F), and carbon atoms (C). The chlorofluorocarbon (CFC)-based refrigerants may include, e.g., trichlorofluoromethane (R-11), dichlorodifluoromethane (R-12), 1,1,2-trichlorotrifluoroethane (R-113), 1,2-dichlorotetrafluoroethane (R-114), chloropentafluoroethane (R-115), or other documented CFC-based refrigerants, or any combinations thereof.

The hydrochlorofluorocarbon (HCFC)-based refrigerants are refrigerants composed of hydrogen atoms (H), chlorine atoms (Cl), fluorine atoms (F), and carbon atoms (C). The hydrochlorofluorocarbon (HCFC)-based refrigerants may include, e.g., difluorochloromethane (R-22), 2,2-dichloro-1,1,1-trifluoroethane (R-123), chlorotetrafluoroethane (R-124), 1-chloro-1,1-difluoroethane (R-142b), or other documented HCFC-based refrigerants, or any combinations thereof.

The hydrofluorocarbon (HFC)-based refrigerants are refrigerants composed of hydrogen atoms (H), fluorine atoms (F), and carbon atoms (C). The hydrofluorocarbon (HFC)-based refrigerants may include, e.g., difluoromethane (R-32), trifluoroiodomethane (R-1311), 1,1-difluoroethane (R-152a), pentafluoroethane (R-125), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), 1,1,1,3,3-pentafluorobutane (R-365mfc), or other documented HFC-based refrigerants, or any combinations thereof.

The hydrofluoroolefin (HFO)-based refrigerants are refrigerants that are composed of hydrogen atoms (H), fluorine atoms (F), and carbon atoms (C) and have at least one double bond between the carbon atoms. The hydrofluoroolefin (HFO)-based refrigerants may include, e.g., 1,1,2-trifluoroethylene (R-1123), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), 1,2,3,3,3-pentafluoropropene (R-1225ye), or other documented HFO-based refrigerants, or any combinations thereof.

The refrigerant mixture may be classified into an azeotropic refrigerant mixture and a zeotropic refrigerant mixture.

An azeotropic refrigerant mixture may refer to a refrigerant in which the boiling points of the respective refrigerants before mixing are the same, and its composition does not change in any state. For example, an azeotropic refrigerant mixture may refer to a refrigerant mixture whose composition does not change during a condensation or evaporation process of the refrigerant mixture. In the case of an azeotropic refrigerant mixture, since the boiling point is fixed at a constant temperature, the composition may not separate during storage and transfer of the refrigerant, but its applicability may be low because it can only be used with a fixed composition ratio. In addition, since many azeotropic refrigerant mixtures are based on hydrochlorofluorocarbon (HCFC)-based refrigerants, chlorofluorocarbon (CFC)-based refrigerants, etc. that contain chlorine (Cl), they can be a cause of ozone layer depletion. Accordingly, a zeotropic refrigerant mixture with a low Global Warming Potential (GWP) may be used instead of an azeotropic refrigerant mixture.

A Zeotropic refrigerant mixture may refer to a refrigerant in which the boiling points of the respective refrigerants before mixing are different from each other, and which has properties different from those of the refrigerants before mixing. For example, a Zeotropic refrigerant mixture may refer to a refrigerant mixture whose composition changes during a condensation or evaporation process of the refrigerant mixture. In the case of a Zeotropic refrigerant mixture, e.g., various refrigerants having a lower global warming potential than an azeotropic refrigerant mixture may be combined and used, and their composition can be freely designed. Accordingly, it may be possible to develop customized refrigerants that consider environmental requirements such as the heat exchange characteristics of a heat pump and the global warming potential.

However, due to the characteristics of a zeotropic refrigerant mixture, the boiling points of the respective refrigerants included in the refrigerant mixture are different, so a change in composition may easily occur. In particular, when storing the refrigerant mixture, the composition of the refrigerant mixture may be sensitive to changes in the temperature and liquid level inside a refrigerant storage tank.

A refrigerant mixture, e.g., a zeotropic refrigerant mixture, stored in a refrigerant storage tank according to some embodiments of the present disclosure may have a small change in composition.

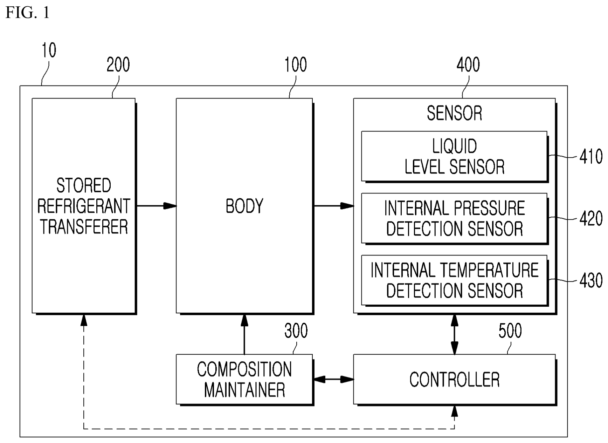

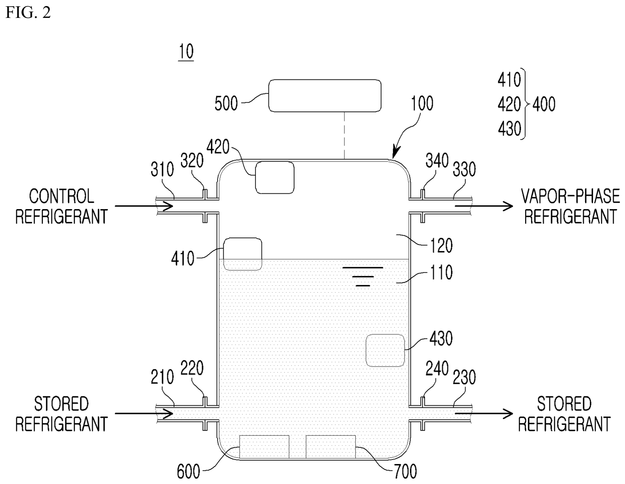

FIG. 1 is a block diagram schematically illustrating a refrigerant storage tank according to an embodiment of the present disclosure. FIG. 2 is a schematic diagram of a refrigerant storage tank according to an embodiment of the present disclosure.

Referring to FIGS. 1 and 2, a refrigerant storage tank 10 according to an embodiment of the present disclosure includes: a body 100 including a storage space 110 in which a stored refrigerant is stored and a head space 120 formed above the storage space 110; a stored refrigerant transferer 200 coupled to the body 100 and including a stored refrigerant inlet line 210, which is in communication with the storage space 110, for introducing the stored refrigerant into the body 100, and a stored refrigerant outlet line 230 for discharging the stored refrigerant from the body 100; a composition maintainer 300 coupled to the body 100 and including a control refrigerant inlet line 310, which is in communication with the head space 120, for introducing a control refrigerant into the body 100, and a vapor-phase refrigerant outlet line 330 for discharging a vapor-phase refrigerant in the head space 120 from the body 100; a sensor 400 including at least one of a liquid level sensor 410, an internal pressure detection sensor 420, and an internal temperature detection sensor 430 disposed in the storage space 110 or the head space 120; and a controller 500 that receives a detection signal from the sensor 400 and controls the composition maintainer 300 to perform introduction of the control refrigerant or discharge of the vapor-phase refrigerant based on the detection signal.

A body 100 according to an embodiment of the present disclosure may include a storage space 110 in which a stored refrigerant in a liquid state is stored, and a head space 120 formed above the storage space 110.

The body 100 may provide a region in which a stored refrigerant is accommodated and a region in which a stored refrigerant is not accommodated, which are distinguished from each other. The storage space 110 is a region in which the stored refrigerant in a liquid state is accommodated, and the head space 120 may be a region that is continuously formed above the storage space 110 and in which the stored refrigerant vaporizes and exists in a gaseous state. Hereinafter, the stored refrigerant existing in a liquid state may be referred to as a 'liquid-phase refrigerant', and the stored refrigerant existing in a gaseous state may be referred to as a 'vapor-phase refrigerant'.

The body 100 may be formed in a sealed container structure. The body 100 may have, for example, a cylindrical or prismatic shape. The storage space 110 and the head space 120 may be naturally partitioned based on a liquid level of the stored refrigerant without a separate partition wall. The internal space of the body 100 may include a lower liquid region containing the liquid refrigerant and which is referred to as the storage space 110 and an upper gaseous region above the lower liquid region containing the vaporized refrigerant and which is referred to as the head space 120.

According to an embodiment, the stored refrigerant may be a zeotropic refrigerant mixture. For example, a difference in boiling point between refrigerants included in the stored refrigerant may be large.

In some embodiments, a refrigerant having a lowest boiling point among the stored refrigerant may have a boiling point lower than that of other refrigerants by 10 °C or more, 12 °C or more, 15 °C or more, or 20 °C or more.

For example, a difference between the boiling point of the refrigerant having the lowest boiling point and the boiling point of the refrigerant having the second lowest boiling point among the stored refrigerant may be 10 °C or more, 12 °C or more, 15 °C or more, or 20 °C or more. In this range, a change in composition that may occur due to a change in temperature or liquid level may be prevented only by the introduction of the refrigerant having the lowest boiling point.

In some embodiments, a difference in boiling point between other refrigerants, excluding the refrigerant with the lowest boiling point among the refrigerant mixture, may be within 8 °C, within 5 °C, within 3 °C, or within 1 °C. In this range, even if the temperature or liquid level of the stored refrigerant changes, a change in composition between the other refrigerants, excluding the refrigerant with the lowest boiling point, may be small.

For example, the refrigerant having the lowest boiling point may be carbon dioxide (R-744). Carbon dioxide is a type of natural refrigerant, may have an Ozone Depleting Potential (ODP) of 0 and a GWP of 1, and may be free from toxicity, explosiveness, or other hazardous properties. Accordingly, while the eco-friendliness and stability of the stored refrigerant containing carbon dioxide (R-744) are improved, the cooling/heating capacity of a heat pump using the stored refrigerant may be improved.

For example, the refrigerant having the lowest boiling point may be difluoromethane (R-32). Difluoromethane (R-32) is a type of hydrofluorocarbon (HFC)-based refrigerant, and may have an ODP of 0 and high heat transfer performance and energy efficiency. Accordingly, while the eco-friendliness and stability of a refrigerant mixture containing difluoromethane (R-32) are improved, the cooling/heating capacity of a heat pump using the refrigerant mixture may be improved.

For example, the refrigerant having the lowest boiling point may be 1,1-difluoroethylene (R-1132a). 1,1-Difluoroethylene (R-1132a) is a type of hydrofluoroolefin (HFO)-based refrigerant, has an ODP of 0 and a GWP of less than 1. Accordingly, while the eco-friendliness of a refrigerant mixture containing 1,1-difluoroethylene (R-1132a) is improved, the cooling/heating capacity of a heat pump using the refrigerant mixture may be improved.

According to an embodiment, when an amount of the stored refrigerant accommodated in the storage space 110 decreases, an area corresponding to the head space 120 may increase. In this case, an amount of the vapor-phase refrigerant increases, and thus an equilibrium condition between the stored refrigerant and the vapor-phase refrigerant may change.

In general, among refrigerants included in a refrigerant mixture in a liquid state, an amount of vaporization of a refrigerant having a relatively low boiling point is greater than an amount of vaporization of a refrigerant having a relatively high boiling point.

Accordingly, when the amount of the vapor-phase refrigerant increases and the area corresponding to the head space 120 increases, a composition ratio of a refrigerant having a relatively low boiling point among refrigerants included in the vapor-phase refrigerant increases, and a composition ratio of a refrigerant having a relatively low boiling point among refrigerants included in the stored refrigerant may decrease.

Accordingly, the composition ratio between the refrigerants included in the stored refrigerant deviates from a range of the composition ratio between the refrigerants at the time of initial manufacturing. Accordingly, the cooling or heating efficiency when operating a heat pump using the stored refrigerant stored in the refrigerant storage tank 10 may be reduced.

The refrigerant storage tank 10 according to embodiments of the present disclosure may maintain a composition ratio between refrigerants included in a refrigerant mixture in a liquid state in consideration of an environment inside the body 100 when storing the refrigerant mixture in a liquid state in the storage space 110.

For example, a control refrigerant, which is the same refrigerant as the refrigerant with the lowest boiling point, may be introduced into the refrigerant storage tank 10, or the refrigerant storage tank 10 may discharge a vapor-phase refrigerant to the outside of the refrigerant storage tank 10 to prevent the composition of the stored refrigerant from changing due to vaporization or evaporation of the refrigerant with the lowest boiling point in the stored refrigerant due to a change in capacity, a change in internal pressure, a change in internal temperature, or other parameters related to physicochemical properties of the stored refrigerant. Accordingly, the vapor-phase refrigerant may be maintained without a change in composition, and as the composition of the vapor-phase refrigerant is maintained, the composition of the stored refrigerant may also be maintained.

The stored refrigerant transferer 200 according to an embodiment of the present disclosure may be coupled to the body 100 and be in communication with the storage space 110. The stored refrigerant transferer 200 may include a stored refrigerant inlet line 210 and a stored refrigerant outlet line 230. The stored refrigerant transferer 200 according to an embodiment may be coupled to a lower portion of the body 100.

According to an embodiment, the stored refrigerant inlet line 210 is a flow path for introducing the stored refrigerant from an external supply source into the storage space 110 of the body 100, and the stored refrigerant outlet line 230 may be a flow path for discharging the stored refrigerant from the storage space 110 of the body 100 to the outside.

According to an embodiment, the stored refrigerant inlet line 210 and the stored refrigerant outlet line 230 may each include a valve 220 and 240. In an embodiment, an introduction timing, an introduction amount, or related feeding parameters of the stored refrigerant may be controlled through a stored refrigerant inlet valve 220. In an embodiment, a discharge timing, a discharge amount, or related discharge parameters of the stored refrigerant may be controlled through a stored refrigerant outlet valve 240.

The composition maintainer 300 according to an embodiment of the present disclosure may be coupled to the body 100 and be in communication with the head space 120. The composition maintainer 300 according to an embodiment may include a control refrigerant inlet line 310 and a vapor-phase refrigerant outlet line 330. The composition maintainer 300 according to an embodiment may be coupled to an upper portion of the body 100.

According to an embodiment, the control refrigerant inlet line 310 is a flow path for introducing a control refrigerant into the head space 120, and the vapor-phase refrigerant outlet line 330 may be a flow path for discharging a vapor-phase refrigerant existing in the head space 120 to the outside.

According to an embodiment, the control refrigerant inlet line 310 and the vapor-phase refrigerant outlet line 330 may each include a valve 320 and 340. In an embodiment, an introduction timing, an introduction amount, or related feeding parameters of the control refrigerant may be controlled through a control refrigerant inlet valve 320. In an embodiment, a discharge timing, a discharge amount, or related discharge parameters of the vapor-phase refrigerant may be controlled through a vapor-phase refrigerant outlet valve 340.

The composition maintainer 300 according to an embodiment may adjust the composition of the vapor-phase refrigerant in response to a pressure and temperature state of the head space 120.

The control refrigerant according to an embodiment is a refrigerant that is introduced to maintain a composition ratio between refrigerants included in the stored refrigerant.

In an embodiment, the control refrigerant may include a refrigerant having a lowest boiling point among the refrigerants included in the stored refrigerant. For example, the control refrigerant may include carbon dioxide (R-744), difluoromethane (R-32), 1,1-difluoroethylene (R-1132a), or other refrigerants having a low boiling point (e.g., a lower boiling point compared to water, R-718), or any combinations thereof. According to an embodiment, the same refrigerant as the refrigerant having the lowest boiling point may be used as the control refrigerant. Accordingly, a change in the composition of the stored refrigerant may be prevented.

In an embodiment, the vapor-phase refrigerant may be a mixed refrigerant in a gaseous state existing inside the head space 120.

In an embodiment, when valves 220, 240, 320, and 340 included in a stored refrigerant inlet line 210, a stored refrigerant outlet line 230, a control refrigerant inlet line 310, and a vapor-phase refrigerant outlet line 330 are closed, an interior of a body 100 may be a closed system. Accordingly, the stored refrigerant stored in the storage space 110 and the vapor-phase refrigerant existing in the head space 120 may not leak to the outside, so that a composition ratio between the refrigerants included in the stored refrigerant may be maintained.

In an embodiment, there may be almost no change in the composition of the refrigerants included in the stored refrigerant stored inside the body 100. For example, a change in the content of the refrigerant having the lowest boiling point among the refrigerants included in the stored refrigerant may be maintained at 0.5 wt% or less, 0.3 wt% or less, or 0.1 wt% or less with respect to a total weight of the stored refrigerant. Accordingly, a composition ratio in the stored refrigerant inlet line 210 of the stored refrigerant and a composition ratio in the stored refrigerant outlet line 230 may be the same or within an error range.

The sensor 400 according to an embodiment of the present disclosure may be disposed in the storage space 110 or the head space 120. The sensor 400 may include at least one of a liquid level sensor 410, an internal pressure detection sensor 420, and an internal temperature detection sensor 430.

In an embodiment, the liquid level sensor 410 may detect a liquid level of the stored refrigerant stored in the storage space 110. In an embodiment, the liquid level sensor 410 may detect whether the liquid level of the storage space 110 rises or falls. In an embodiment, the liquid level sensor 410 may detect a degree of rise or fall of the liquid level of the storage space 110.

In an embodiment, a change in an internal liquid level may be measured through the liquid level sensor 410 as a difference (H'-H) between a liquid level (H') of the storage space 110 at a time of measurement and a liquid level (H) in an initial equilibrium state of the storage space 110. Accordingly, the liquid level sensor may output a signal for calculating the difference (H'-H) between the liquid level (H') at the time of measurement and the liquid level (H) in the initial equilibrium state to the controller.

In an embodiment, the liquid level (H) in the initial equilibrium state of the storage space 110 may be the liquid level (H) when a mixed refrigerant in a liquid state and a mixed refrigerant in a gaseous state reach an equilibrium state after the stored refrigerant is introduced into the body 100.

In an embodiment, an amount of the stored refrigerant introduced into the body 100 may be such that the liquid level (H) in the initial equilibrium state of the storage space 110 is 0 to 90%, 10% to 90%, 20% to 90%, 30% to 90%, 40% to 90%, 50% to 90%, 60% to 90%, 70% to 90%, or 80% to 90% based on a total height of the body 100.

In an embodiment, the internal pressure detection sensor 420 may detect a pressure inside the body 100. For example, the pressure inside the body 100 may be confirmed by measuring a pressure of the head space 120.

In an embodiment, a change in an internal pressure may be measured through the internal pressure detection sensor 420 as a difference (P'-P) between a pressure (P') of the head space 120 at a time of measurement and a pressure (P) of the head space 120 in an initial equilibrium state. Accordingly, the internal pressure detection sensor may output a signal for calculating the difference (P'-P) between the internal pressure (P') at the time of measurement and the internal pressure (P) in the initial equilibrium state to the controller.

In an embodiment, the pressure (P) of the head space 120 in the initial equilibrium state may be a pressure when a mixed refrigerant in a liquid state and a mixed refrigerant in a gaseous state reach an equilibrium state after the stored refrigerant is introduced into the body 100.

In an embodiment, the pressure (P) of the head space 120 in the initial equilibrium state may be 0 to 400 bar, 0 bar to 310 bar, or 0 to 100 bar. Within the above range, a risk of the refrigerant storage tank 10 being damaged or exploding may be reduced.

In an embodiment, the internal temperature detection sensor 430 may detect a temperature inside the body 100. For example, the temperature inside the body 100 may be confirmed by measuring a temperature of the mixed refrigerant in a liquid state stored in the storage space 110.

In an embodiment, the sensor 400 may generate and output detection values of the liquid level sensor 410, the internal pressure detection sensor 420, and the internal temperature detection sensor 430 as a detection signal.

The controller 500 according to an embodiment of the present disclosure may receive a detection signal from the sensor 400. The controller 500 may control the composition maintainer 300 to perform introduction of the control refrigerant or discharge of the vapor-phase refrigerant based on the detection signal. For example, the controller 500 may operate according to a logic programmed for the stored refrigerant in consideration of a result detected by the sensor 400.

The controller 500 according to an embodiment may determine a control condition by comparing a liquid level of the stored refrigerant, a change in an internal pressure of the body 100, an internal temperature of the body 100, or other parameters related to the condition of the body 100. That is, the controller 500 may adjust whether to introduce the control refrigerant (or whether to discharge the vapor-phase refrigerant), an introduction amount (or a discharge amount of the vapor-phase refrigerant), or other feeding parameters in response to a change in a state of the head space 120. Accordingly, the controller 500 may selectively operate the control refrigerant inlet line 310 or the vapor-phase refrigerant outlet line 330. Accordingly, the controller 500 may adjust whether to introduce the control refrigerant (or whether to discharge the vapor-phase refrigerant), the introduction amount (or the discharge amount of the vapor-phase refrigerant), or other feeding parameters by adjusting the valves 320 and 340.

For example, the controller 500 may determine whether to introduce the control refrigerant (or whether to discharge the vapor-phase refrigerant), an introduction amount (or a discharge amount of the vapor-phase refrigerant), or other feeding parameters by comparing liquid level information, pressure information, and temperature information in an initial equilibrium state with liquid level information, pressure information, and temperature information detected by the sensor 400.

In an embodiment, the change in the internal liquid level (H'-H) may be adjusted to a range of -1% to 1%, -0.8% to 0.8%, -0.5% to 0.5%, -0.3% to 0.3%, or -0.1% to 0.1% based on the liquid level (H) in the initial equilibrium state. In this range, the change in the composition of the stored refrigerant may be kept small.

In an embodiment, when the liquid level (H') of the storage space 110 at the time of measurement, measured by the liquid level sensor 410, drops by a predetermined value or more based on the liquid level (H) in the initial equilibrium state, the control refrigerant may be introduced into the body 100. That is, the controller 500 may control the control refrigerant inlet line 310 so that the control refrigerant is introduced into the body 100. According to an embodiment, the controller 500 may open a control refrigerant inlet valve 320 coupled to the control refrigerant inlet line 310.

For example, when the liquid level (H') of the storage space 110 at the time of measurement, measured by the liquid level sensor 410, drops by 1% or more, 0.8% or more, 0.5% or more, 0.3% or more, or 0.1% or more based on the liquid level (H) in the initial equilibrium state, the control refrigerant may be introduced into the body 100.

In an embodiment, when the liquid level (H') of the storage space 110 at the time of measurement, measured by the liquid level sensor 410, rises by a predetermined value or more based on the liquid level (H) in the initial equilibrium state, the vapor-phase refrigerant may be discharged to the outside. That is, the controller 500 may control the vapor-phase refrigerant outlet line 330 so that the vapor-phase refrigerant is discharged to the outside of the body 100. According to an embodiment, the controller 500 may open a vapor-phase refrigerant outlet valve 340 coupled to the vapor-phase refrigerant outlet line 330.

For example, when the liquid level (H') of the storage space 110 at the time of measurement, measured by the liquid level sensor 410, rises by 1% or more, 0.8% or more, 0.5% or more, 0.3% or more, or 0.1% or more based on the liquid level (H) in the initial equilibrium state, the vapor-phase refrigerant may be discharged to the outside.

In an embodiment, when the pressure change (P'-P) inside the body 100 deviates from a range of -0.5% to 0.5%, -0.3% to 0.3%, or -0.1% to 0.1% based on the pressure (P) of the head space 120 in the initial equilibrium state, the control refrigerant may be introduced into the body 100 or the vapor-phase refrigerant may be discharged to the outside of the body 100.

In an embodiment, when the pressure (P') inside the body 100, measured by the internal pressure detection sensor 420, decreases by a predetermined value or more based on the pressure (P) of the head space 120 in the initial equilibrium state, the control refrigerant may be introduced into the body 100. That is, the controller 500 may control the control refrigerant inlet line 310 so that the control refrigerant is introduced into the body 100. According to an embodiment, the controller 500 may open a control refrigerant inlet valve 320 coupled to the control refrigerant inlet line 310.

For example, when the pressure (P') inside the body 100, measured by the internal pressure detection sensor 420, decreases by 0.5% or more, 0.3% or more, or 0.1% or more based on the pressure (P) of the head space 120 in the initial equilibrium state, the control refrigerant may be introduced into the body 100.

In an embodiment, when the pressure (P') inside the body 100, measured by the internal pressure detection sensor 420, increases by a predetermined value or more based on the pressure (P) of the head space 120 in the initial equilibrium state, the vapor-phase refrigerant may be discharged to the outside. That is, the controller 500 may control the vapor-phase refrigerant outlet line 330 so that the vapor-phase refrigerant is discharged to the outside of the body 100. According to an embodiment, the controller 500 may open a vapor-phase refrigerant outlet valve 340 coupled to the vapor-phase refrigerant outlet line 330.

In an embodiment, when the pressure (P') inside the body 100, measured by the internal pressure detection sensor 420, increases by 0.5% or more, 0.3% or more, or 0.1% or more based on the pressure (P) of the head space 120 in the initial equilibrium state, the vapor-phase refrigerant may be discharged to the outside.

In an embodiment, the introduction amount of the control refrigerant or the discharge amount of the vapor-phase refrigerant may be determined based on the initial temperature (T1) inside the body 100 measured by the internal temperature detection sensor 430 and the appropriate pressure (P1) at the initial temperature (T1).

The term 'appropriate pressure' as used in the present disclosure may refer to the pressure applied to the stored refrigerant at which no composition change occurs among the refrigerants included in the stored refrigerant (i.e., maintaining the composition of the initial equilibrium state). For example, the appropriate pressure of the stored refrigerant may vary depending on the types and/or composition ratio of the refrigerants included in the stored refrigerant, and may vary depending on the temperature of the stored refrigerant.

In an embodiment, it may be confirmed whether the stored refrigerant stored inside the body 100 satisfies the appropriate pressure based on the temperature of the storage space 110 measured through the internal temperature detection sensor 430 and the pressure of the head space 120 measured through the internal pressure detection sensor 420.

In an embodiment, information about the appropriate pressure at a specific temperature for each stored refrigerant may be stored in the controller 500 and may serve as a reference point for determining whether to introduce the control refrigerant (or whether to discharge the vapor-phase refrigerant), the introduction amount (or the discharge amount of the vapor-phase refrigerant), or other feeding parameters. Accordingly, the controller 500 may control the control refrigerant inlet line 310 and the vapor-phase refrigerant outlet line 330 for the introduction of the control refrigerant or the discharge of the vapor-phase refrigerant.

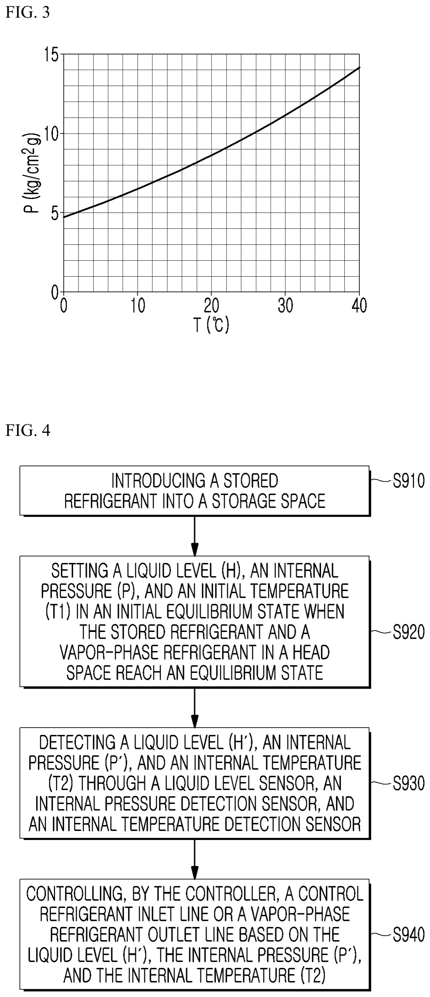

FIG. 3 is a graph illustrating the appropriate pressure according to temperature when a stored refrigerant according to an embodiment of the present disclosure is used. In FIG. 3, the pressure P is expressed in kg/cm²g, which denotes gauge pressure relative to atmospheric pressure.

In FIG. 3, a zeotropic refrigerant mixture in which R-744, R-420a, and R-13I1 are mixed at a ratio of 4:60:36 is used as the stored refrigerant.

Referring to FIG. 3, the pressure of the head space 120 measured through the internal pressure detection sensor 420 immediately after the stored refrigerant is introduced into the body 100 may be the appropriate pressure (P1) of the stored refrigerant at the initial temperature (T1).

In an embodiment, the introduction amount of a control refrigerant A (R-744) or the discharge amount of a vapor-phase refrigerant A (a refrigerant in which R-744, R-420a, and R-1311 are mixed at a ratio of 4:60:36) may be determined based on the initial temperature (T1) and the appropriate pressure (P1).

For example, if the internal temperature after an initial state is the same as the initial temperature (T1) and the internal pressure after the initial state increases above the appropriate pressure (P1) at the initial temperature (T1), an appropriate amount of the vapor-phase refrigerant A may be discharged to the outside of the body 100 through the vapor-phase refrigerant outlet line 330 until the internal pressure reaches the appropriate pressure (P1).

For example, if the internal temperature is the same as the initial temperature (T1) and the internal pressure decreases below the appropriate pressure (P1) at the initial temperature (T1), an appropriate amount of the control refrigerant A may be introduced into the body 100 through the control refrigerant inlet line 310 until the internal pressure reaches the appropriate pressure (P1).

For example, if the internal pressure is equal to an appropriate pressure (P1) in an equilibrium state and an internal temperature (T2) increases above an initial temperature (T1), an appropriate amount of a control refrigerant A may be introduced into a body 100 through a control refrigerant inlet line 310 until the internal pressure reaches an appropriate pressure (P2) at the internal temperature (T2).

For example, if the internal pressure is equal to an appropriate pressure (P1) in an equilibrium state and an internal temperature (T2) decreases below an initial temperature (T1), an appropriate amount of a vapor-phase refrigerant A may be discharged to the outside of a body 100 through a vapor-phase refrigerant outlet line 330 until the internal pressure reaches an appropriate pressure (P2) at the internal temperature (T2).

In an embodiment, the refrigerant storage tank 10 may further include a temperature maintainer. The temperature maintainer may include at least one of a heater 600 and a cooler 700.

The heater 600 according to an embodiment may be coupled to an outer circumferential surface of the body, or the heater 600 may be inserted and disposed inside the body. For example, the heater 600 may be any one of an electric heater, a heating wire, and a heating jacket.

The cooler 700 according to an embodiment may be coupled to an outer circumferential surface of the body. Alternatively, the cooler 700 may be formed as a heat exchange structure inside the body. For example, the cooler 700 may be any of a cooling coil, a cooling jacket, and a heat exchanger.

The temperature maintainer according to an embodiment may be electrically connected to a controller 500. The controller 500 according to an embodiment may receive a detection signal from an internal temperature detection sensor 430. Accordingly, the controller 500 may control driving of the heater 600 or the cooler 700 based on the internal temperature detected by the internal temperature detection sensor 430.

In an embodiment, the heater 600 and the cooler 700 may maintain the temperature inside the body 100 within a certain range. For example, the temperature inside the body 100 may be maintained in a range of -50 °C to 50 °C, -40 °C to 40 °C, -30 °C to 30 °C, -20 °C to 20 °C, or - 10 °C to 10 °C.

For example, when an initial temperature (T1) is 25 °C, the controller 500 may drive the cooler 700 when an internal temperature (T2) exceeds 30 °C. In addition, the controller 500 may drive the heater 600 when the internal temperature (T2) is less than 20 °C. For example, the controller 500 may repeatedly control the driving of the heater 600 and the cooler 700 so that the internal temperature (T2) is maintained at 25 °C.

Accordingly, it is possible to maintain a composition ratio between refrigerants included in the stored refrigerant while minimizing an introduction amount of the control refrigerant or a discharge amount of the vapor-phase refrigerant.

The refrigerant storage tank 10 according to the present disclosure may suppress a change in the composition of the stored refrigerant by detecting a state of a storage space 110 and a head space 120 with a sensor 400 and controlling a composition maintainer 300 with a controller 500 to perform introduction of a control refrigerant or discharge of a vapor-phase refrigerant.

FIG. 4 is a flowchart illustrating a refrigerant storage method according to an embodiment of the present disclosure. In the refrigerant storage method according to an embodiment of the present disclosure, a detailed description of some overlapping parts with the above-described refrigerant storage tank will be omitted.

Referring to FIG. 4, a refrigerant storage method according to an embodiment of the present disclosure is a refrigerant storage method using the refrigerant storage tank, and includes an operation of introducing a stored refrigerant into a storage space S910, an operation of setting a liquid level (H), an internal pressure (P), and an initial temperature (T1) in an initial equilibrium state when the stored refrigerant and a vapor-phase refrigerant in a head space reach an equilibrium state S920, an operation of detecting a liquid level (H'), an internal pressure (P'), and an internal temperature (T2) through a liquid level sensor, an internal pressure detection sensor, and an internal temperature detection sensor S930, and an operation of the controller controlling a control refrigerant inlet line or a vapor-phase refrigerant outlet line based on the liquid level (H'), the internal pressure (P'), and the internal temperature (T2) S940.

In an embodiment, a stored refrigerant to be stored in the refrigerant storage tank and a control refrigerant for maintaining a composition are determined.

In an embodiment, the stored refrigerant may be a refrigerant mixture in a liquid state. For example, the refrigerant mixture in a liquid state may be a zeotropic refrigerant mixture.

In an embodiment, the control refrigerant may be a refrigerant having a lowest boiling point among refrigerants included in the stored refrigerant. For example, the refrigerant having the lowest boiling point among the refrigerants included in the stored refrigerant may be carbon dioxide.

In an embodiment, the stored refrigerant may be introduced into the storage space inside the body. For example, the stored refrigerant may be introduced into the storage space inside the body through a stored refrigerant inlet line.

In an embodiment, an internal parameter of the body may be sensed through the sensor. For example, the sensor may detect a change in an internal liquid level (H'-H), a change in pressure inside the body (P'-P), and/or a temperature inside the body and transmit the detected information to the controller.

In an embodiment, after the stored refrigerant is introduced into the body, a liquid level (H) in an initial equilibrium state, which is a liquid level when the stored refrigerant and a vapor-phase refrigerant vaporized from the stored refrigerant reach an equilibrium state inside the body, may be measured. The liquid level (H) in the initial equilibrium state may become a reference point for measuring a change in the liquid level through the liquid level sensor.

In an embodiment, after the stored refrigerant is introduced into the body, a pressure (P) in an initial equilibrium state, which is a pressure when the stored refrigerant and a vapor-phase refrigerant vaporized from the stored refrigerant reach an equilibrium state inside the body, may be measured. The pressure (P) in the initial equilibrium state may become a reference point for measuring a change in the internal pressure through the internal pressure detection sensor.

In an embodiment, the liquid level of the stored refrigerant may be measured, for example, through the liquid level sensor at intervals of 10 seconds, 5 seconds, 3 seconds, or 1 second.

In an embodiment, the pressure inside the refrigerant storage tank may be measured at the same cycle as the measurement cycle of the liquid level of the stored refrigerant. For example, the internal pressure may be measured at intervals of 10 seconds, 5 seconds, 3 seconds, or 1 second through the internal pressure detection sensor.

In an embodiment, the temperature inside the refrigerant storage tank may be measured at the same cycle as the measurement cycle of the liquid level of the stored refrigerant. For example, the internal temperature may be measured at intervals of 10 seconds, 5 seconds, 3 seconds, or 1 second through the internal temperature detection sensor.

According to an embodiment, the controller may determine the introduction of the control refrigerant or the discharge of the vapor-phase refrigerant according to the sensing result.

In an embodiment, when a change in an internal liquid level (H'-H) decreases by a predetermined level or more with respect to the liquid level (H) in an initial equilibrium state, the control refrigerant may be introduced into the body.

In an embodiment, when a change in an internal liquid level (H'-H) increases by a predetermined level or more with respect to the liquid level (H) in an initial equilibrium state, the vapor-phase refrigerant may be discharged to the outside.

In an embodiment, when a change in an internal pressure (P'-P) decreases by a predetermined pressure or more with respect to the pressure (P) in an initial equilibrium state, the control refrigerant may be introduced into the body.

In an embodiment, when a change in an internal pressure (P'-P) increases by a predetermined pressure or more with respect to the pressure (P) in an initial equilibrium state, the vapor-phase refrigerant may be discharged to the outside.

In an embodiment, when there is no change in an internal temperature and an internal pressure measured by the internal pressure detection sensor increases above an appropriate pressure (P1) at an initial temperature (T1), the vapor-phase refrigerant may be discharged to the outside of the body until the internal pressure reaches the appropriate pressure (P1).

In an embodiment, when there is no change in an internal temperature and an internal pressure of the body measured by the internal pressure detection sensor decreases to be lower than an appropriate pressure (P1) at an initial temperature (T1), the control refrigerant may be introduced into the body until the internal pressure reaches the appropriate pressure (P1).

In an embodiment, when there is no change in an internal pressure and an internal temperature (T2) measured by the internal temperature detection sensor increases to be higher than the initial temperature (T1), the control refrigerant may be introduced into the body until the internal pressure reaches an appropriate pressure (P2) at the internal temperature (T2).

In an embodiment, when there is no change in an internal pressure and an internal temperature (T2) measured by the internal temperature detection sensor decreases to be lower than the initial temperature (T1), the vapor-phase refrigerant may be discharged to the outside of the body until the internal pressure reaches an appropriate pressure (P2) at the internal temperature (T2).

In an embodiment, an amount of introduction of the control refrigerant or an amount of discharge of the vapor-phase refrigerant may be determined based on a temperature inside the body measured by the internal temperature detection sensor.

In an embodiment, the controller may operate according to a logic programmed for the stored refrigerant. For example, through the controller 500, whether to introduce the control refrigerant, a timing of introduction, an amount of introduction, etc., or whether to discharge the vapor-phase refrigerant, a timing of discharge, an amount of discharge, etc., may be determined according to the sensing result and the logic programmed for the stored refrigerant. Accordingly, the controller may control the control refrigerant inlet line and the vapor-phase refrigerant outlet line for the introduction of the control refrigerant or the discharge of the vapor-phase refrigerant.

According to an embodiment of the present disclosure, a change in the composition of the stored refrigerant may be suppressed by detecting a liquid level, an internal pressure, and an internal temperature and controlling inflow and outflow of the control refrigerant and the vapor-phase refrigerant.

A refrigerant storage tank according to an embodiment of the present disclosure may include a liquid level sensor and an internal pressure detection sensor. Accordingly, a point in time when the composition of the stored refrigerant changes beyond a certain range may be identified through detection of a change in the liquid level and/or the internal pressure.

A refrigerant storage tank according to an embodiment of the present disclosure may include an internal temperature detection sensor. Accordingly, an amount of the control refrigerant to be introduced or an amount of the vapor-phase refrigerant to be discharged to maintain the composition of the refrigerant mixture may be adjusted.

The refrigerant storage tank and the refrigerant storage method of the present disclosure may be used for storing an eco-friendly refrigerant mixture that has a low GWP and prevents ozone layer depletion.

## Claims

1. A refrigerant storage tank (10), comprising:
a body (100) comprising a storage space (110) that is adapted to store a refrigerant, and a head space (120) that is provided above the storage space (110);
a stored refrigerant transferer (200) coupled to the body (100) and comprising a stored refrigerant inlet line (210) that is in communication with the storage space (110) and configured to introduce the stored refrigerant into the body (100), and a stored refrigerant outlet line (230) that is configured to discharge the stored refrigerant from the body (100);
a composition maintainer (300) coupled to the body (100) and comprising a control refrigerant inlet line (310) that is in communication with the head space (120) and configured to introduce a control refrigerant into the body (100), and a vapor-phase refrigerant outlet line (330) that is configured to discharge a vapor-phase refrigerant in the head space (120) from the body (100);
a sensor (400) comprising at least one of a liquid level sensor (410), an internal pressure detection sensor (420), and an internal temperature detection sensor (430), disposed in the storage space (110) or the head space (120); and
a controller (500) that is connected to the sensor (400) and the composition maintainer (300).

2. The refrigerant storage tank (10) according to claim 1, wherein the stored refrigerant is a zeotropic refrigerant mixture in a liquid state, and
wherein the control refrigerant comprises a refrigerant having a lowest boiling point among refrigerants included in the stored refrigerant.

3. The refrigerant storage tank (10) according to claim 2, wherein the boiling point of the refrigerant having the lowest boiling point among the refrigerants included in the stored refrigerant is lower than boiling points of other refrigerants by 10 °C or more, more preferably by 12 °C or more, even more preferably by 15 °C or more and most preferably by 20 °C or more.

4. The refrigerant storage tank (10) according to any one of claims 1 to 3, wherein each of the stored refrigerant inlet line (210), the stored refrigerant outlet line (230), the control refrigerant inlet line (310), and the vapor-phase refrigerant outlet line (330) comprises a valve (220, 240, 320, 340).

5. The refrigerant storage tank (10) according to any one of claims 1 to 4, further comprising a temperature maintainer comprising at least one of a heater (600) and a cooler (700).

6. A refrigerant storage method using a refrigerant storage tank (10), the method comprising:
introducing a refrigerant into a storage space (110) that is included in a body (100) comprised in the refrigerant storage tank (10);
setting a liquid level (H), an internal pressure (P), and an initial temperature (T1) in an initial equilibrium state when the stored refrigerant and a vapor-phase refrigerant in a head space (120) comprised in the refrigerant storage tank (10) have reached an equilibrium state;
detecting a liquid level (H'), an internal pressure (P'), and an internal temperature (T2) through a liquid level sensor (410), an internal pressure detection sensor (420), and an internal temperature detection sensor (430), respectively; and
controlling, by a controller (500), a control refrigerant inlet line (310) or a vapor-phase refrigerant outlet line (330) based on the liquid level (H'), the internal pressure (P'), and the internal temperature (T2).

7. The refrigerant storage method according to claim 6, wherein the controlling comprises:
when the liquid level (H') drops by a predetermined value or more based on the liquid level (H) in the initial equilibrium state, controlling the control refrigerant inlet line (310) such that a control refrigerant is introduced into the body (100); and
when the liquid level (H') rises by a predetermined value or more based on the liquid level (H) in the initial equilibrium state, controlling the vapor-phase refrigerant outlet line (330) such that the vapor-phase refrigerant is discharged to an outside of the body (100).

8. The refrigerant storage method according to claim 7, wherein a signal is output by the liquid level sensor (410) to the controller (500) for calculating a difference (H'-H) between the liquid level (H') at a time of measurement and the liquid level (H) in the initial equilibrium state, and
wherein, when the liquid level (H') detected by the liquid level sensor (410) drops by the predetermined value or more based on the liquid level (H) in the initial equilibrium state, the control refrigerant inlet line (310) is controlled by the controller (500) such that the control refrigerant is introduced into the body (100), and/or
wherein, when the liquid level (H') detected by the liquid level sensor (410) rises by the predetermined value or more based on the liquid level (H) in the initial equilibrium state, the vapor-phase refrigerant outlet line (330) is controlled by the controller (500) such that the vapor-phase refrigerant is discharged to the outside of the body (100),
optionally wherein the predetermined value is in a range of 1% or more, 0.8% or more, 0.5% or more, 0.3% or more, or 0.1% or more based on the liquid level (H) in the initial equilibrium state.

9. The refrigerant storage method according to any one of claims 6 to 8, wherein the controlling further comprises:
when the internal pressure (P') decreases by a predetermined value or more based on the internal pressure (P) in the initial equilibrium state, controlling the control refrigerant inlet line (310) such that the control refrigerant is introduced into the body (100); and
when the internal pressure (P') increases by a predetermined value or more based on the internal pressure (P) in the initial equilibrium state, controlling the vapor-phase refrigerant outlet line (330) such that the vapor-phase refrigerant is discharged to the outside of the body (100).

10. The refrigerant storage method according to claim 9, wherein a signal for calculating a difference (P'-P) between the internal pressure (P') at a time of measurement and the internal pressure (P) in the initial equilibrium state is output to the controller (500) by the internal pressure detection sensor (420), and
wherein, when the internal pressure (P') detected by the internal pressure detection sensor (420) decreases by the predetermined value or more based on the internal pressure (P) in the initial equilibrium state, the control refrigerant inlet line (310) is controlled by the controller (500) such that the control refrigerant is introduced into the body (100), and/or
wherein, when the internal pressure (P') detected by the internal pressure detection sensor (420) increases by the predetermined value or more based on the internal pressure (P) in the initial equilibrium state, the vapor-phase refrigerant outlet line (330) is controlled by the controller (500) such that the vapor-phase refrigerant is discharged to the outside of the body (100),
optionally wherein the predetermined value is in a range of 0.5% or more, 0.3% or more, or 0.1% or more based on the pressure (P) of the head space 120 in the initial equilibrium state.

11. The refrigerant storage method according to any one of claims 6 to 10,
wherein it is determined by the controller (500) whether the stored refrigerant satisfies the appropriate pressure (P1) based on the initial temperature (T1) in the initial equilibrium state detected by the internal temperature detection sensor (430) and the internal pressure (P') detected by the internal pressure detection sensor (420), and
wherein the control refrigerant inlet line (310) or the vapor-phase refrigerant outlet (330) line is controlled by the controller (500) based on a result of the determination.

12. The refrigerant storage method according to any one of claims 6 to 11, wherein the controlling further comprises:
in a state where the internal temperature (T2) is the same as the initial temperature (T1), when the internal pressure (P') increases beyond an appropriate pressure (P1) corresponding to the initial temperature (T1), controlling the vapor-phase refrigerant outlet line (330) such that the vapor-phase refrigerant is discharged to the outside of the body (100) until the internal pressure (P') reaches the appropriate pressure (P1); and
in a state where the internal temperature (T2) is the same as the initial temperature (T1), when the internal pressure (P') decreases below the appropriate pressure (P1), controlling the control refrigerant inlet line (310) such that the control refrigerant is introduced into the body (100) until the internal pressure (P') reaches the appropriate pressure (P1).

13. The refrigerant storage method according to claim 12, wherein
when the internal temperature (T2) after the initial equilibrium state is the same as the initial temperature (T1), and the internal pressure (P') after the initial equilibrium state increases beyond the appropriate pressure (P1) at the initial temperature (T1), the vapor-phase refrigerant outlet line (330) is controlled by the controller (500) such that the vapor-phase refrigerant is discharged to the outside of the body (100) until the internal pressure (P') reaches the appropriate pressure (P1), and
when the internal pressure (P') after the initial equilibrium state decreases below the appropriate pressure (P1) at the initial temperature (T1), the control refrigerant inlet line (310) is controlled by the controller (500) such that the control refrigerant is introduced into the body (100) until the internal pressure (P') reaches the appropriate pressure (P1).

14. The refrigerant storage method according to any one of claims 6 to 11, wherein the controlling further comprises:
in a state where the internal pressure (P') is the same as the appropriate pressure (P1), when the internal temperature (T2) increases beyond the initial temperature (T1), controlling the control refrigerant inlet line (310) such that the control refrigerant is introduced into the body (100) until the internal pressure (P') reaches an appropriate pressure (P2) corresponding to the internal temperature (T2); and
in a state where the internal pressure (P') is the same as the appropriate pressure (P1), when the internal temperature (T2) decreases below the initial temperature (T1), controlling the vapor-phase refrigerant outlet line (330) such that the vapor-phase refrigerant is discharged to the outside of the body (100) until the internal pressure (P') reaches the appropriate pressure (P2) corresponding to the internal temperature (T2).

15. The refrigerant storage method according to claim 14, wherein
when the internal pressure (P') after the initial equilibrium state is the same as the appropriate pressure (P1), and the internal temperature (T2) after the initial equilibrium state increases beyond the initial temperature (T1), the control refrigerant inlet line (310) is controlled by the controller (500) such that the control refrigerant is introduced into the body (100) until the internal pressure (P') reaches the appropriate pressure (P2) corresponding to the internal temperature (T2), and
when the internal temperature (T2) after the initial equilibrium state decreases below the initial temperature (T1), the vapor-phase refrigerant outlet line (330) is controlled by the controller (500) such that the vapor-phase refrigerant is discharged to the outside of the body (100) until the internal pressure (P') reaches the appropriate pressure (P2) corresponding to the internal temperature (T2).
